Europäisches Patentamt

European Patent Office

Office européen des brevets

(19)

(11) Numéro de publication : **0 433 109 B1**

(12) **FASCICULE DE BREVET EUROPEEN**

(45) Date de publication du fascicule du brevet :
**14.09.94 Bulletin 94/37**

(51) Int. Cl.⁵ : **H01S 3/107**

(21) Numéro de dépôt : **90403214.1**

(22) Date de dépôt : **13.11.90**

(54) **Dispositif permettant d'accorder de façon continue une source de lumière cohérente et polarisée rectilignement.**

(30) Priorité : **15.11.89 FR 8914979**

(43) Date de publication de la demande :
**19.06.91 Bulletin 91/25**

(45) Mention de la délivrance du brevet :
**14.09.94 Bulletin 94/37**

(84) Etats contractants désignés :
**DE FR GB IT NL**

(56) Documents cités :
**FR-A- 2 575 613**
**APPL. PHYS. LETT., vol. 51, no. 3, 20 juillet 1987, pages 164-166; F. HEISMANN et al.: "Narrow-linewidth, electro-optically tunable InGaAsP-Ti:LiNbO3 extended cavity laser"**
**OPTICS COMMUNICATIONS, vol. 47, no. 1, 1 août 1983, pages 12-17; C. CHAPPUIS et al.: "Broad band electro-optic tuning of a CW dye laser"**
**APPLIED PHYSICS LETTERS, vol. 30, no. 2, 15 janvier 1977, pages 113-116; C.L.TANG et al.: "Wide-band electro-optical tuning of semiconductor lasers"**

(56) Documents cités :
**APPLIED PHYSICS LETTERS, vol. 55, no. 1, 3 juillet 1989, pages 19-21; A.SCHREMER et al.: "Single-frequency tunable external-cavity semiconductor laser using an electro-optic birefringent modulator"**
**APPLIED PHYSICS LETTERS, vol. 24, no. 2, 15 janvier 1974, pages 85-87; J.M.TELLE et al.: "New method for electro-optical tuning of tunable lasers"**

(73) Titulaire : **FRANCE TELECOM**
**6, Place d'Alleray**
**F-75015 Paris (FR)**

(72) Inventeur : **Sorel, Yvon**
**Kernu-Louannec**
**F-22700 Perros Guirec (FR)**
Inventeur : **Kerdiles, Jean-François**
**Landrellec**
**F-22560 Pleumeur-Bodou (FR)**
Inventeur : **Goedgebuer, Jean-Pierre**
**33 Clos de la Rocheraie**
**F-25115 Pouilley Les Vignes (FR)**
Inventeur : **Porte, Henri**
**Les Vocielles**
**F-25770 Serre les Sapins (FR)**

(74) Mandataire : **Mongrédien, André et al**
**c/o BREVATOME**
**25, rue de Ponthieu**
**F-75008 Paris (FR)**

## Description

La présente invention concerne un dispositif permettant d'accorder de façon continue la fréquence d'émission d'une source de lumière cohérente et polarisée rectilignement. Elle trouve une application notamment en télécommunications optiques où elle permet d'obtenir un rayonnement cohérent accordable par exemple autour de 1,52 micromètre de longueur d'onde, avec une faible largeur spectrale, de l'ordre de 100 kHz.

Dans la présente invention, la source de lumière est munie d'une cavité externe qui est terminée par un moyen de réflexion, vers la source, de la lumière émise par cette source.

Cette dernière peut être un laser, par exemple un laser à gaz, dont on a allongé la cavité.

La source peut également être un laser à semiconducteur dont la face, qui est du côté du moyen de réflexion, est traitée par une couche anti-reflet.

Le dispositif objet de l'invention est alors conçu pour être inséré dans la cavité du laser à semiconducteur et permet d'accorder continûment la fréquence d'émission de ce laser à semiconducteur sur une pluralité de plages spectrales qui peuvent recouvrir la largeur du spectre d'émission spontanée du laser à semiconducteur.

L'un des objectifs recherchés dans les liaisons par fibres optiques est l'accordabilité de la fréquence d'émission des sources (diodes-lasers), utilisées dans de telles liaisons, en particulier pour remédier aux problèmes de calage et de dérive des longueurs d'ondes des sources. Ainsi, en multiplexage en longueur d'onde, le nombre de canaux, théoriquement illimité, est en pratique limité par les dérives en longueur d'onde des diodes lasers et par la dispersion des paramètres d'émission des diodes-lasers lors de la fabrication de celles-ci. De ce fait, la plupart des systèmes de télécommunication multiplexés en longueur d'onde sont actuellement limités à une dizaine de canaux entre 800 nm et 1300 nm, faute de dispositifs fiables permettant d'ajuster finement la longueur d'onde d'émission des diodes-lasers.

L'accordabilité de la fréquence d'émission des diodes lasers constitue également un problème-clef dans les liaisons cohérentes optiques à grande distance. Dans ce type de liaisons, la fréquence de la source émettrice doit être accordée sur celle de l'oscillateur local pour effectuer une démodulation par hétérodynage optique. De la même manière, dans les réseaux locaux multicolores, le multiplexage optique de plusieurs canaux sur un même réseau est réalisé en affectant à chaque canal une fréquence optique particulière au moyen de diodes-lasers verrouillées sur des fréquences prédéterminées.

A chaque extrémité du réseau, le démultiplexage est effectué par hétérodynage au moyen d'une diode-laser (se comportant comme un oscillateur local) dont la fréquence est accordée sur l'une des fréquences porteuses. La mise au point de lasers à semiconducteurs monofréquences, à fréquence continûment accordable, est donc ici encore essentielle pour des réseaux locaux à haute densité de multiplexage.

D'autres applications requièrent également une accordabilité fine et continue de la fréquence d'émission des diodes-lasers :

En métrologie optique, certaines techniques de mesure mettant en oeuvre par exemple les phénomènes de tacheture (ou "speckle") à plusieurs longueurs d'ondes utilisent des phénomènes d'interférences multilongueurs d'ondes pour relever la topographie d'une surface ou l'état de cette surface.

En spectroscopie moléculaire, l'analyse du spectre d'émission ou d'absorption de molécules éclairées par une onde lumineuse de fréquence rapidement variable peut donner des informations sur leur comportement en régime dynamique ou transitoire.

L'utilisation d'une diode-laser ayant une longueur d'onde d'émission continûment accordable a été également récemment proposée pour l'étude de phénomènes de bistabilité, de multistabilité et de chaos en longueur d'onde (IEEE J. of Quantum Electronics, 23, 2, 1987, pp. 153-157).

Généralement, l'accordabilité continue de la fréquence d'émission d'une diode-laser est obtenue par modification du courant traversant la jonction de cette diode-laser ou par une modification de la température de la diode-laser. Toutefois, l'excursion de fréquence ainsi obtenue reste relativement faible (quelques centaines de MHz/mA et environ 1GHz/°C) et s'avère insuffisante pour les applications évoquées plus haut.

Un autre procédé consiste à utiliser une diode laser montée en cavité externe à l'intérieur de laquelle est inséré un réseau optique. A ce sujet, on se reportera aux documents (1) à (4) qui, comme les autres documents cités par la suite, sont mentionnés à la fin de la présente description.

On pourra également consulter le document (5).

Les documents (1) à (4) décrivent différents dispositifs d'accord continu de la fréquence des diodes-lasers à cavité externe. Par rotation, un réseau de diffraction permet d'obtenir une émission monofréquence (de largeur de raie de quelques dizaines de kHz) accordable sur une plage spectrale étendue (30 nm) centrée sur 1300 nm ou sur 1500 nm.

L'accordabilité continue est obtenue en modifiant la longueur optique de la cavité externe en même temps que s'effectue la rotation du réseau contenu dans cette cavité. Cette modification de la longueur optique de la cavité est obtenue soit en utilisant la course du réseau (documents (1) et (2)), soit par des dispositifs de translation piézoélectriques (document (4)), soit encore par modification du courant traversant la jonction pn de la diode-laser (document (3)). Toutefois, pour certaines applications, ces techniques sont limitées par leur faible vitesse d'accord, par leur sensibilité aux réglages mécaniques ou par l'impossibilité de passer d'une fréquence à une autre sans passer par les fréquences intermédiaires.

Une accordabilité obtenue électriquement plutôt que mécaniquement est plus intéressante car elle permet de remédier aux inconvénients précédents. Une solution consiste à intégrer monolithiquement sur un laser DFB ou DBR la fonction d'accordabilité, à partir de structures lasers à sections séparées, commandées électriquement. Par contrôle du courant dans chacune des sections, une émission monomode accordable peut être obtenue. De tels systèmes nécessitent un contrôle fin des courants d'injection et une technologie très élaborée pour la réalisation de couches formant de telles structures, comme celles qui sont décrites par exemple dans le document (6). Des plages d'accord continu de 380 GHz ont été récemment obtenues dans la fenêtre de 1500 nm, avec des largeurs de raie de 20 à 100 MHz.

Une autre technique connue permettant d'obtenir une fréquence d'émission accordable électriquement, consiste à utiliser un modulateur électro-optique monté dans la cavité d'une diode-laser à cavité externe. Ce type de dispositif est dérivé des dispositifs électro-optiques d'accord en longueur d'onde de lasers à colorant, qui sont décrits par exemple dans les documents (7) à (11) et dans lesquels l'accordabilité s'effectue par sauts de modes.

Ainsi, dans les documents (10) et (11) est décrit un système d'accord électro-optique comportant un cristal de KD*P de coupe 0°Z, inséré dans la cavité d'une diode-laser à cavité externe et permettant d'obtenir un accord par sauts de modes sur une plage de 4 nm, dans la fenêtre de 800 nm, en appliquant sur le cristal une tension de 6 kV.

Un autre système connu, permettant d'obtenir un accord par sauts de modes, est décrit dans le document (12).

Une autre approche, proposée dans le document (13), consiste à utiliser une diode laser à cavité externe, cette diode-laser étant couplée à un filtre spectral électro-optique intégré sur un substrat de $LiNbO_3$ de coupe X, avec propagation de la lumière suivant l'axe Y. Le filtre électro-optique comporte un double ensemble d'électrodes. Un premier ensemble d'électrodes interdigitées permet d'effectuer un accord de la fréquence d'émission par sauts de modes sur une plage étendue en introduisant un couplage sélectif entre les modes de propagation TE et TM se propageant dans un guide optique réalisé par diffusion de Titane dans le substrat. Le second ensemble d'électrodes induit une modulation de phase sur le rayonnement se propageant dans le guide pour effectuer une accordabilité continue sur une plage étroite.

Dans ce dispositif connu, un accord de fréquence sur une plage de 7 nm, centrée sur 1500 nm, est réalisé par sauts de modes en appliquant une tension de 100 volts sur le premier ensemble d'électrodes. L'accordabilité continue est réalisée sur une pluralité de plages de 1 GHz avec une largeur de raie de 60 kHz pour une cavité de longueur optique égale à 8 cm.

Une autre solution permettant d'accorder électriquement la fréquence d'une diode-laser à cavité externe consiste à utiliser deux cellules acousto-optiques placées dans la cavité, comme cela est décrit dans le document (14). La plage d'accord s'étend sur 35 nm, est centrée sur 1500 nm, mais s'effectue par sauts de modes.

On pourra également consulter le document (15) en ce qui concerne l'accord au moyen de cellules acousto-optiques.

La présente invention a pour but de remédier à l'inconvénient que présentent les dispositifs connus, utilisant un modulateur électro-optique à cristal massif, à savoir l'obtention d'un accord seulement de façon discontinue, par sauts de modes.

La présente invention vise un dispositif permettant d'accorder continûment la fréquence d'émission d'une source de lumière cohérente et polarisée rectilignement, munie d'une cavité externe, et en particulier la fréquence d'émission d'un laser à semiconducteur à cavité externe, sur une plage spectrale étendue, pouvant atteindre la largeur du spectre d'émission spontanée du laser à semiconducteur.

A cet effet, le dispositif objet de l'invention comporte non seulement un moyen électro-optique à cristal électro-optique massif, ce moyen permettant de sélectionner un mode longitudinal parmi ceux qui sont susceptibles d'osciller à l'intérieur de la cavité mais encore un moyen électro-optique de variation de la longueur optique de cette cavité, ce dernier moyen comprenant un cristal électro-optique massif, étant placé dans la cavité et permettant de déplacer de façon continue la position du mode longitudinal sélectionné.

De façon précise, la présente invention a pour objet un dispositif d'accord d'une source de lumière cohérente et polarisée rectilignement, cette source comportant une cavité externe terminée par un moyen de réflexion, vers la source, de la lumière émise par cette source, ce dispositif comprenant un moyen électro-optique qui comprend un cristal électro-optique massif, est placé dans la cavité externe et forme un filtre spectral à fonction de transfert modulable électriquement, ce moyen électro-optique étant prévu pour sélectionner un mode longitudinal particulier parmi l'ensemble des modes longitudinaux susceptibles d'osciller à l'intérieur de la cavité, dispositif caractérisé en ce qu'il comprend en outre un moyen électro-optique de variation de la longueur optique de la cavité, ce moyen de variation comprenant un cristal électro-optique massif, étant placé dans la cavité et prévu pour déplacer de façon continue la position du mode longitudinal sélectionné.

Selon un premier mode de réalisation particulier du dispositif objet de l'invention, chacun des axes rapide et lent du cristal électro-optique du moyen formant un filtre spectral fait un angle de 45° avec le plan de polarisation de la lumière issue de la source.

Selon un deuxième mode de réalisation particulier, le moyen électro-optique formant un filtre spectral comprend en outre une lame biréfringente, l'axe rapide et l'axe lent de la lame biréfringente sont respectivement parallèles à l'axe rapide et à l'axe lent du cristal électro-optique de ce moyen formant un filtre spectral et chacun de ces axes fait un angle de 45° avec le plan de polarisation de la lumière issue de la source.

L'adjonction de la lame biréfringente permet de réduire la tension électrique de commande du moyen électro-optique formant le filtre spectral.

Selon un troisième mode de réalisation particulier, chacun des axes rapide et lent du cristal électro-optique du moyen formant un filtre spectral fait un angle de 45° avec le plan de polarisation de la lumière issue de la source et ce cristal est inclinable par rapport à l'axe optique de la cavité.

On peut ainsi se passer de la lame biréfringente.

Dans la présente invention, la sélection d'un mode longitudinal particulier et la variation de la longueur optique de la cavité sont obtenues à l'aide de deux cristaux électro-optiques massifs (dont on peut faire varier la biréfringence par application d'un champ électrique). En fait, certaines réalisations mentionnées plus loin n'utilisent même qu'un seul cristal électro-optique massif qui est alors commun aux deux moyens électro-optiques.

On utilise donc, d'une manière générale, au moins un cristal électro-optique massif, par opposition à un dispositif électro-optique intégré, et l'on met ainsi en oeuvre une technologie plus simple que celle qui est mise en oeuvre avec le dispositif optique intégré décrit dans le document (13), ce qui permet d'éliminer, d'une part, les problèmes de dérive de température généralement inhérents aux composants optiques intégrés et, d'autre part, les problèmes de perte de propagation et de couplage, tout en obtenant, de façon avantageuse, des courants de seuil plus faibles que ceux qui sont obtenus avec le dispositif optique intégré décrit dans le document (13).

De plus, dans le dispositif décrit dans le document (13), il n'y a qu'une seule orientation cristalline et l'on agit sur des électrodes interdigitées alors que, dans la présente invention, comme on le comprendra mieux par la suite, les deux moyens électro-optiques comprennent respectivement des cristaux biréfringents dont les orientations cristallines sont différentes et l'on joue sur ces orientations différentes et aussi sur l'effet de deux champs électriques dont les orientations respectives sont également différentes.

L'utilisation, dans l'invention, d'un moyen électro-optique, à cristal électro-optique massif, pour faire varier la longueur optique de la cavité, présente également l'avantage suivant : il permet d'ajuster, de façon simple, la largeur de la plage spectrale d'accord et les caractéristiques de l'émission de lumière en fonction des applications auxquelles il est destiné.

Dans le cas où l'on utilise un laser à semiconducteur, ces applications peuvent être : la transmission de signaux par modulation de fréquence optique à des fréquences pouvant atteindre plusieurs centaines de MHz, le multiplexage en longueur d'onde de signaux dans le domaine des télécommunications ou des capteurs optiques, les réseaux multicolores, les liaison cohérentes, les mesures de dispersion de fibres optiques et, de façon générale, tous les systèmes nécessitant une accordabilité lente ou rapide de la fréquence d'émission de lasers à semiconducteurs.

L'un des axes rapide et lent du cristal électro-optique du moyen de variation de la longueur optique de la cavité peut être parallèle au plan de polarisation de la lumière issue de la source.

Dans une réalisation particulière, le dispositif objet de l'invention comprend, dans la cavité :

- une lame biréfringente, dont chacun des axes rapide et lent fait un angle de 45° avec le plan de polarisation de la lumière issue de la source, et
- un cristal biréfringent dont on peut modifier la biréfringence par application d'un champ électrique, dont l'un des axes rapide et lent est parallèle au plan de polarisation de la lumière issue de la source et qui comporte :
  . une première portion munie d'électrodes et prévue pour former le moyen de variation de la longueur optique de la cavité, et
  . une deuxième portion qui est munie d'électrodes permettant de créer un champ électrique perpendiculaire au champ électrique que permettent de créer les électrodes de la première portion, et qui est prévue pour former, en coopération avec la lame biréfringente, le moyen électro-optique formant le filtre spectral.

Ceci permet de réduire la longueur de la cavité et donc d'augmenter la largeur de la plage spectrale sur laquelle l'accord continu en fréquence a lieu.

Dans une autre réalisation particulière, conduisant à une cavité encore plus courte, le dispositif objet de l'invention comprend, dans la cavité :

- une lame biréfringente, dont chacun des axes rapide et lent fait un angle de 45° avec le plan de polarisation de la lumière issue de la source, et
- un cristal biréfringent dont on peut modifier la biréfringence par application d'un champ électrique, dont l'un des axes rapide et lent est parallèle au plan de polarisation de la lumière issue de la source et qui porte un premier couple d'électrodes ainsi qu'un deuxième couple d'électrodes permettant de créer un champ électrique perpendiculaire au champ électrique que permettent de créer les électrodes du premier couple, ce premier couple d'électrodes coopérant avec le cristal pour former le moyen de variation de la longueur optique de la cavité et le deuxième couple d'électrodes coopérant avec le cristal pour former, en coopération avec la lame biréfringente, le moyen électro-optique formant le filtre spectral.

Dans le cas où le dispositif objet de l'invention comprend une lame biréfringente, il peut comprendre en outre un moyen d'inclinaison de cette lame biréfringente par rapport à l'axe optique de la cavité.

Ceci permet de régler la fréquence centrale des plages d'accord et les taux d'accord.

Enfin, le moyen de réflexion de la lumière émise par la source peut être une couche apte à réfléchir cette lumière et formée sur l'élément biréfringent qui, dans la cavité, est le plus éloigné de la source.

La présente invention sera mieux comprise à la lecture de la description suivante, d'exemples de réalisation donnés à titre purement indicatif et nullement limitatif, en référence aux dessins annexés sur lesquels :

- la figure 1a est une vue schématique d'un mode de réalisation particulier du dispositif objet de l'invention, pour l'accord d'une diode-laser à cavité externe,
- les figures 1b à 1e illustrent schématiquement le fonctionnement du dispositif représenté sur la figure 1a,
- la figure 2 est une vue schématique d'un autre mode de réalisation particulier du dispositif objet de l'invention, comportant une lame biréfringente,
- la figure 3 est une vue schématique d'un autre mode de réalisation particulier, comportant un composant électro-optique inclinable,
- la figure 4 est une vue schématique d'un dispositif conforme à l'invention, comportant un cristal biréfringent muni de deux couples d'électrodes décalés longitudinalement l'un par rapport à l'autre,
- la figure 5 est une vue schématique d'un autre dispositif conforme à l'invention, comportant un cristal biréfringent muni de deux couples d'électrodes non décalés l'un part rapport à l'autre, et
- la figure 6 illustre schématiquement un dispositif conforme à l'invention, pour l'accord de la fréquence d'émission d'un laser à gaz.

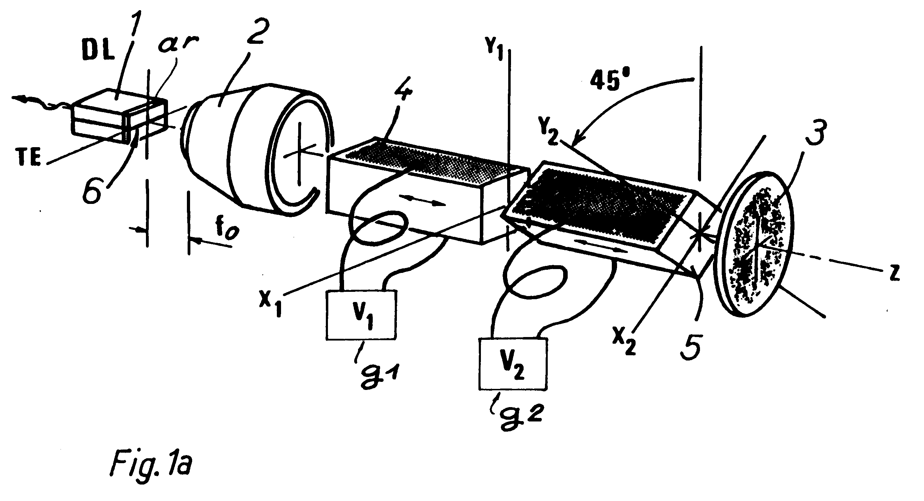

Le dispositif conforme à l'invention, qui est schématiquement représenté sur la figure 1a, est destiné à accorder de façon continue la fréquence d'émission d'une diode-laser 1 à cavité externe.

La diode-laser 1 comporte une face arrière clivée, de coefficient de réflexion égal à environ 0,3 et une face avant traitée par une couche anti-reflet ar et de coefficient de réflexion faible, de l'ordre de $10^{-4}$ (c'est-à-dire, pratiquement, compris entre $5.10^{-5}$ et $2.10^{-4}$).

En regard de la face avant de la diode-laser 1 est placée une lentille de collimation 2 et, en regard de cette lentille 2, est placé un miroir 3.

Le dispositif conforme à l'invention, qui est représenté sur la figure 1a, comprend un premier élément 4, par exemple de type électro-optique, capable de modifier la longueur optique de la cavité, et un deuxième élément 5 qui est un filtre spectral électro-optique. Ces deux éléments 4 et 5 sont placés dans la cavité, entre la lentille 2 et le miroir 3.

La lentille 2 a pour fonction de transformer un faisceau lumineux divergent, issu de la face avant de la diode-laser 1, en un faisceau parallèle qui se propage suivant l'axe optique Z du système représenté sur la figure 1a (diode-laser 1, lentille 2, éléments 4 et 5 et miroir 3).

Sur la figure 1a, la distance focale qui sépare la face avant de la diode-laser 1 de la lentille de collimation 2, est notée fo. Par ailleurs, on voit sur cette figure 1a que l'axe optique Z est contenu dans le plan de la jonction PN de la diode-laser 1. Cette jonction porte la référence 6 sur la figure 1a.

La diode-laser 1 émet une lumière qui est polarisée rectilignement, le plan de polarisation TE (transverse-électrique) étant confondu avec le plan de la jonction 6.

La lumière, qui est produite par le système représenté sur la figure 1a et que l'on utilise pour l'application que l'on a choisie, est celle qui est issue de la face arrière de la diode-laser 1.

Le miroir 3 a pour fonction de réfléchir la lumière qui lui parvient de la diode-laser 1 à travers la lentille 2 et les éléments 4 et 5, vers cette diode-laser 1 (à travers les éléments 5 et 4 et la lentille 2).

On précise que les faces de tous les composants (lentille 2, éléments 4 et 5 pour la figure 1a) qui sont situés dans la cavité externe de la diode-laser 1, faces qui sont traversées par la lumière, sont traitées anti-reflet.

Dans l'exemple représenté sur la figure 1a, chacun des éléments 4 et 5 est formé par un seul cristal électro-optique massif de forme allongée suivant l'axe optique Z. Chaque cristal électro-optique porte, respectivement sur deux faces opposées l'une à l'autre par rapport à l'axe optique Z, deux électrodes permettant d'engendrer, dans le cristal correspondant, un champ électrique perpendiculaire à l'axe Z, lorsqu'on applique entre ces deux électrodes une tension électrique.

La tension électrique appliquée entre les électrodes du cristal 4 est notée V1 et fournie par un générateur approprié g1 permettant de faire varier cette tension V1. De même, la tension électrique appliquée entre les électrodes du cristal 5 est notée V2 et fournie par un générateur approprié g2 permettant de faire varier cette tension V2.

Ainsi les éléments 4 et 5 sont commandés séparément.

Les cristaux 4 et 5 sont biréfringents. L'axe rapide du cristal 4 (respectivement 5) est noté X1 (respectivement X2) et l'axe lent de ce cristal 4 (respectivement 5) est noté Y1 (respectivement Y2).

La disposition du cristal 4 est telle que l'un de ses axes rapide et lent soit orienté perpendiculairment au plan de polarisation TE de la lumière émise par la diode-laser 1, l'autre de ces axes rapide et lent étant ainsi parallèle à ce plan de polarisation.

La disposition du cristal 5 est telle que chacun de ses axes rapide et lent fasse un angle de 45° avec le plan de polarisation TE, chacun des axes X2 et Y2 faisant ainsi un angle de 45° avec l'axe X1 et avec l'axe Y1.

A titre purement indicatif et nullement limitatif, chacun des cristaux 4 et 5 est un cristal en forme de parallélépipède rectangle, en niobate de lithium, de coupe 0°Z et, dans ce cas, les électrodes du cristal 4 (respectivement 5) sont placées de façon que le champ électrique engendré dans ce cristal soit parallèle à l'axe lent Y1 (respectivement Y2) dudit cristal.

On explique ci-après le fonctionnement du dispositif représenté sur la figure 1a, en considérant les deux cristaux massifs 4 et 5, bien que ces derniers puissent être remplacés par un cristal massif unique ayant une double structure d'électrodes, comme on le verra par la suite.

Le cristal 5 est conçu pour introduire, en l'absence de tension électrique entre ses électrodes (V2=0), un retard optique prédéterminé $D_0$ entre les rayons ordinaire et extraordinaire qui traversent ce cristal 5 suivant un seul passage.

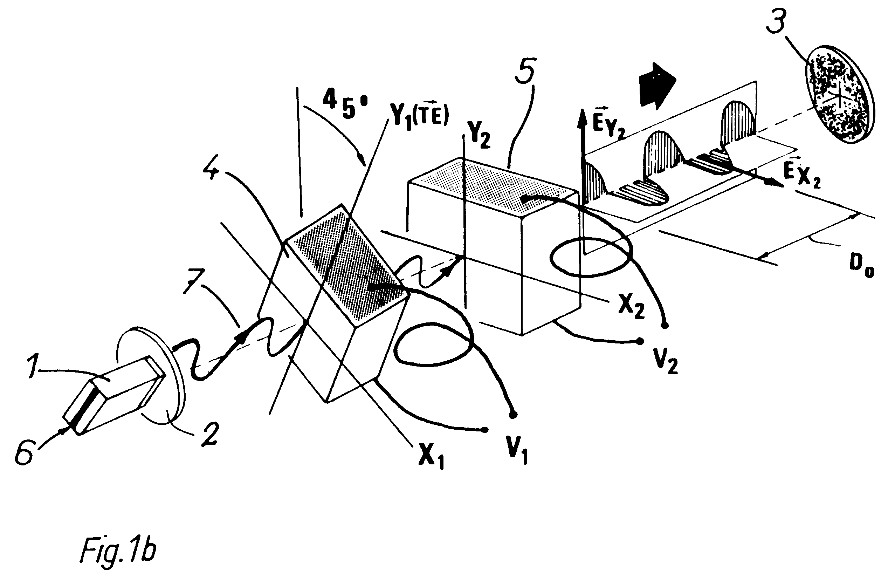

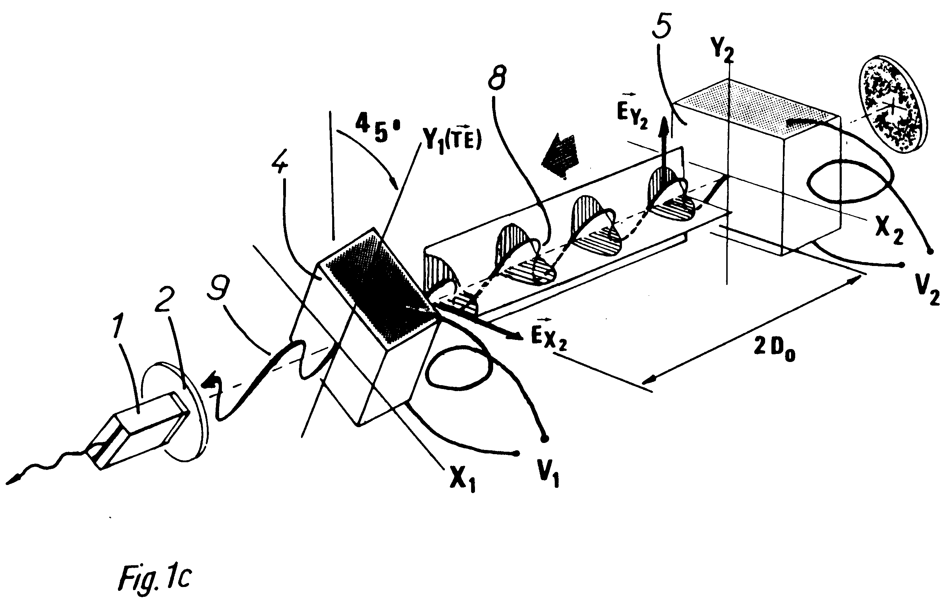

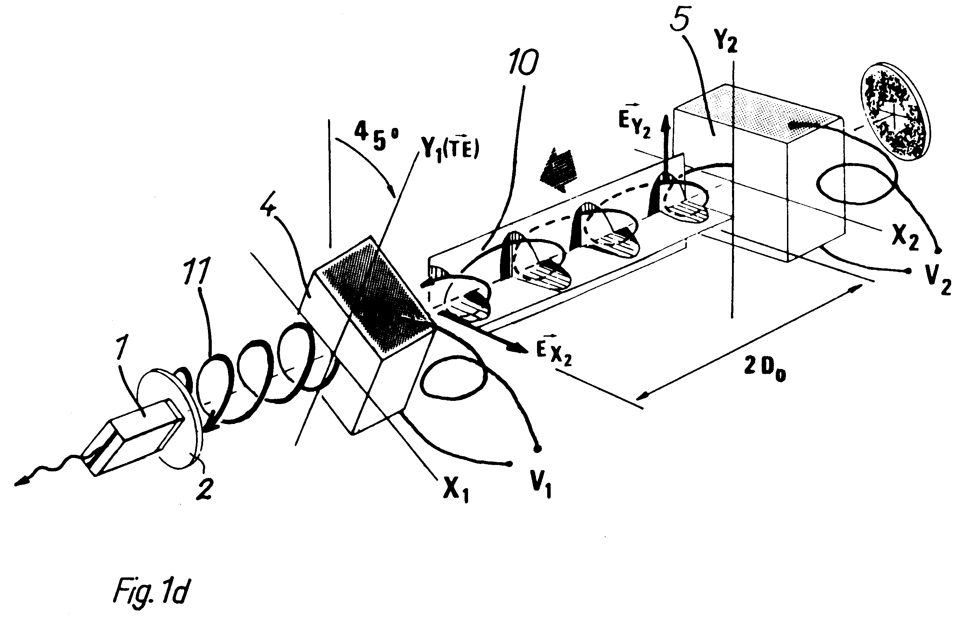

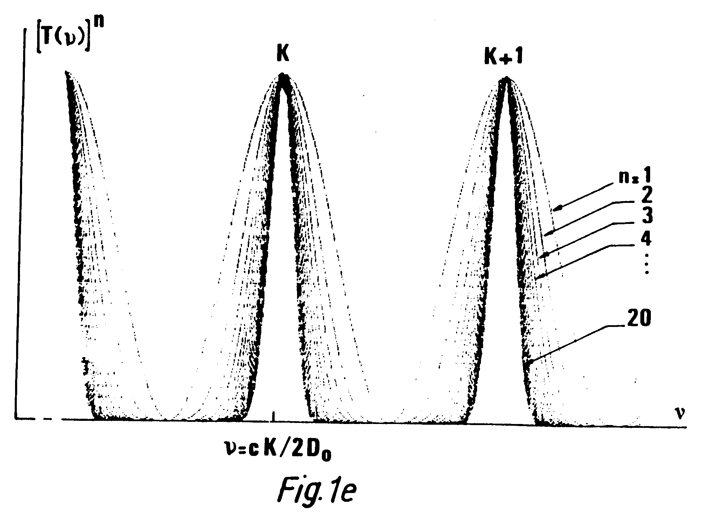

La figure 1b montre ce qui se passe pour un trajet aller (de gauche à droite) de la lumière dans la cavité. On notera que sur la figure 1b, comme d'ailleurs sur les figures 1c et 1d, le dessin de la lentille de collimation 2 a été simplifié et que c'est l'axe Y1 qui est parallèle au plan de la jonction 6 alors que sur la figure 1a c'est l'axe X1 qui est parallèle à ce plan de la jonction.

L'onde lumineuse 7 est d'abord émise par la diode-laser suivant son mode TE de propagation. Celui-ci est polarisé linéairement dans un plan parallèle à la jonction 6 de la diode-laser 1. Le cristal 4 étant traversé le premier par l'onde 7 suivant son axe Y1, celui-ci ne modifie pas l'état de polarisation de l'onde 7 et introduit un déphasage f sur lequel on reviendra plus loin.

En traversant ensuite le cristal 5, la lumière est par contre décomposée vectoriellement suivant les deux axes orthogonaux X2 et Y2 en un champ ordinaire $E_{X2}$ et un champ extraordinaire $E_{Y2}$. Le retard entre ces deux champs est appelé dans la suite "retard optique d'offset" et noté $D_0$.

Lors du trajet retour, et après la seconde traversée du cristal 5, le retard entre $E_{X2}$ et $E_{Y2}$ devient $2D_0$, ce qui correspond à un déphasage $F=4pi.D_0/l$ où l représente la longueur d'onde de la lumière et pi est le nombre bien connu qui vaut approximativement 3,1416.

La valeur de ce déphasage F détermine les conditions de sélection des modes longitudinaux de la cavité, comme cela va maintenant être expliqué.

La figure 1c montre la situation quand F=2K.pi (K : nombre entier). Les ondes $E_{X2}$ et $E_{Y2}$ sont alors en phase. Elles donnent une onde résultante 8 polarisée linéairement suivant la direction TE.

Après la traversée du cristal 4, l'état de polarisation de l'onde 9 reste identique à celui de l'onde 8. L'onde 9 est injectée dans la diode-laser 1 au moyen de la lentille 2. On a alors émission stimulée et oscillation laser dans la cavité à la longueur d'onde l pour laquelle la relation F 2K.pi est vérifiée.

La figure 1d montre le comportement d'une onde lors du trajet retour, dans le cas où l'on a affaire à un mode longitudinal pour lequel la relation F = 2K.pi n'est pas vérifiée. Les champs $E_{X2}$ et $E_{Y2}$ sont toujours séparés par le retard optique $2D_0$ mais ne sont plus en phase. L'onde résultante 10 est alors une onde polarisée elliptiquement.

A la traversée du cristal 4, l'onde 10 subit des déphasages supplémentaires. Elle donne une onde 11 dont l'état de polarisation, bien que différent de celui de l'onde 10, reste elliptique de façon générale. Cette onde 11 est alors rapidement atténuée par les pertes de propagation à l'intérieur de la diode-laser 1. On n'a pas émission laser.

Finalement l'émission laser a lieu sur le mode longitudinal l vérifiant simultanément :

$$F = 4pi.D_0/l = 2K.pi \text{ (K : nombre entier)} \quad (1)$$
$$L = k.l/2 \quad \text{(k : nombre entier)} \quad (2)$$

La relation (2) est la relation bien connue de résonance donnant les modes longitudinaux susceptibles d'osciller à l'intérieur d'une cavité laser de longueur optique L.

L'accordabilité de la fréquence d'émission s'effectue en appliquant entre les électrodes du cristal 5 une tension électrique V2. Celle-ci a pour effet de moduler le retard optique autour de la valeur d'offset $D_0$. La relation (1) montre alors que toute variation $dD_0$ de retard optique se traduit par une variation linéaire dl de la longueur d'onde d'émission suivant la loi :

$$dl = 2dD_0/K \quad (3)$$

On sélectionne ainsi un mode longitudinal particulier parmi l'ensemble des modes longitudinaux susceptibles d'osciller dans la cavité. Cette accordabilité, se fait par sauts de modes. La valeur du retard optique d'offset $D_0$ détermine les paramètres de l'accordabilité comme on va maintenant l'expliquer en ayant recours à une autre approche des phénomènes physiques mis en jeu.

Cette autre approche, complémentaire de la précédente, permet de mieux comprendre comment choisir le retard optique d'offset $D_0$ et pourquoi le dispositif permet d'obtenir une émission monofréquence. Ce dernier point est déterminant dans nombre d'applications relevant des télécommunications par fibres optiques, en particulier dans les transmissions cohérentes et les réseaux multicolores.

D'après la description qui précède, la jonction 6 de la diode-laser 1 se comporte comme un polariseur pour les ondes se propageant dans la cavité. Après un aller-retour de la lumière dans la cavité, la sélectivité spectrale introduite par le cristal 5 est donc décrite par la relation :

$$T(v) = 1 + \cos(2pi.(v/c).2D_0) \quad (4)$$

qui est la relation bien connue décrivant la courbe de transmission spectrale, en fonction de la fréquence v, d'un cristal biréfringent placé entre deux polariseurs parallèles et introduisant un retard optique $2D_0$ entre ses axes lent et rapide, c étant la vitesse de la lumière.

En fait, la situation est plus complexe. Au fur et à mesure que le nombre n de transits de l'onde lumineuse augmente dans la cavité, la sélectivité spectrale du cristal 5 devient de plus en plus élevée. Sa courbe de transmission spectrale devient :

$$(T(v))^n = (1 + \cos(2pi.(v/c).2D_0)^n \quad (5)$$

La figure 1e montre l'évolution de la courbe spectrale de transmission $(T(v))^n$. La finesse des pics de transmission augmente à mesure que n augmente. Ceci explique que généralement l'émission laser obtenue par ce procédé est monofréquence, la sélectivité du filtre augmentant avec le nombre d'allers et retours de la lumière dans la cavité.

Les différents pics de transmission sont situés aux fréquences v telles que :

$$v = c.K/(2D_0) \quad (K : \text{nombre entier}) \quad (6)$$

La relation (6) est identique à la relation (1). Le nombre entier K représente ici le numéro d'ordre du pic de transmission. La distance entre deux pics de transmission est :

$$dv' = c/(2D_0) \quad (7)$$

Le choix de la valeur du retard optique $D_0$ détermine les conditions de fonctionnement du cristal 5. Les meilleures conditions de fonctionnement sont obtenues lorsque la distance dv' entre deux pics de transmission adjacents est supérieure ou sensiblement égale à la largeur dv de la "plage spectrale à balayer". D'après les relations (6) et (7), ceci est sensiblement réalisé lorsque $D_0$ est peu différent de $0{,}5\ l^2/dl$ (relation (8)), quantité dans laquelle l est la longueur d'onde moyenne d'émission et dl est la largeur spectrale de la "plage d'accord" (plage que l'on veut balayer continûment).

En appliquant la tension V2 sur le cristal 5, le retard optique d'offset donné par la relation (8) est légèrement modifié et a pour effet de moduler le retard optique autour de cette valeur d'offset $D_0$. La diode-laser va donc changer de mode longitudinal et se mettre à osciller sur l'un des autres modes de la cavité externe. L'accordabilité s'effectue par sauts de modes.

A la différence du cristal 5, le cristal 4 est orienté de manière que l'un de ses axes lent et rapide soit parallèle au plan de la jonction 6 de la diode-laser 1 (figure 1a). L'effet du cristal 4 est d'introduire sur une onde TE le traversant un chemin optique e, c'est-à-dire un retard de phase modulable par effet Pockels par la tension de commande V1.

En traversant le cristal 4, et après un aller-retour dans la cavité, le mode longitudinal l, qui a été sélectionné par le cristal 5 de la manière décrite plus haut, reste polarisé linéairement suivant la direction TE mais subit un déphasage égal à 2f.

Celui-ci est modulable par effet Pockels par la tension de commande V1. Ceci a pour conséquence de modifier la longueur optique L de la cavité d'une quantité dL et d'induire un accord continu de la longueur d'onde du mode sélectionné par le cristal 5 suivant la loi :

$$dl = 2\ dL/k.$$

La largeur maximale des plages d'accord continu ainsi obtenues est $dv=c/(2L)$. Elle est parcourue dans sa totalité quand l'élément 4 induit une variation de chemin optique $dL=l/2$.

Les conditions de fonctionnement des deux éléments 4 et 5 vont maintenant être illustrées par un exemple dans lequel on utilise une diode-laser en InGaAsP/InP de longueur d'onde l=1500 nm ($v=2.10^{14}$ Hz) accordable sur une plage dl=20 nm ($dv=2{,}6.10^{12}$ Hz).

La relation (8) montre que le retard optique d'offset doit être sensiblement de 57 micromètres. L'accordabilité par sauts de modes sur la plage dl=20 nm est réalisée en faisant varier le retard optique d'une quantité $\pm D_0.dl/l=\pm 0{,}75$ micromètre (soit $\pm l/2$), c'est-à-dire de $\pm 0{,}38$ micromètre (soit $\pm l/4$) autour de la valeur d'offset. Ceci est réalisé en appliquant la tension de commande V2 entre les électrodes du cristal 5. La valeur de la tension de commande V2 est déterminée par la tension demi-onde $V_{pi}$ du cristal et dépend donc du type de cristal utilisé.

Une fois que le cristal 5 a permis de sélectionner un mode longitudinal donné parmi l'ensemble des modes de la cavité externe, le cristal 4 permet d'effectuer une accordabilité continue de la fréquence d'émission autour du mode longitudinal sélectionné. Ceci est effectué en appliquant la tension V1 sur le christal 4. La largeur maximale de la plage sur laquelle un accord continu est possible est égale à la largeur d'un intervalle intermodal.

Par exemple, si la longueur optique de la cavité est L=10 cm, l'excursion de fréquence est possible sans saut de mode sur une plage large de $dv=c/(2L)=1{,}5$ GHz. La variation de retard optique introduite par le cristal 4 est alors $dL=L.dv/v=l/2=0{,}7$ micromètre.

Des cristaux de configuration particulière permettent d'optimiser la compacité de la cavité comme cela sera expliqué plus loin et ainsi d'obtenir des plages d'accord continu dont la largeur peut aller jusqu'à une dizaine de GHz.

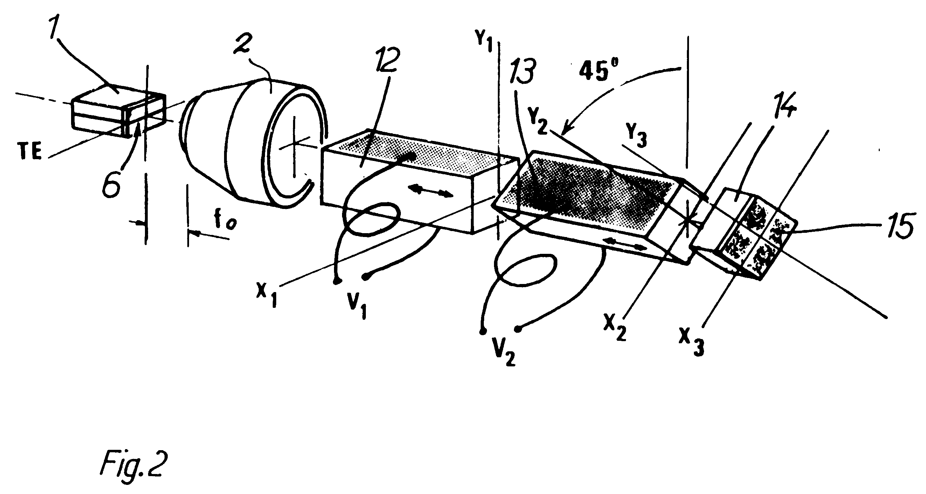

Sur la figure 2, on a représenté schématiquement un dispositif conforme à l'invention, qui diffère de celui qui est représenté sur la figure 1a par le fait que le miroir 3 est supprimé et que le dispositif de la figure 2 comporte, en plus d'un cristal 12, homologue du cristal 4, et d'un cristal 13, homologue du cristal 5, une lame biréfringente 14 qui est placée sur le trajet de la lumière, dans la partie de la cavité la plus éloignée de la diode-laser 1, et qui porte une couche 15 apte à réfléchir la lumière, cette lumière repartant ainsi vers la diode-laser 1 à travers les cristaux 13 et 12 et la lentille 2. La couche 15 joue ici le rôle de miroir d'extrémité de la cavité, la lumière devant traverser la lame 14 avant d'arriver au miroir.

Bien entendu, au lieu de la couche 15, on pourrait utiliser un miroir du genre du miroir 3, séparé des composants de la cavité et terminant celle-ci.

Les cristaux 12 et 13 sont des cristaux de $LiNbO_3$ de coupe 0°Z. Chacun de ces cristaux porte, comme dans le cas de la figure 1a, un couple d'électrodes permettant d'induire un champ électrique orienté suivant l'axe cristallographique y de ce cristal (axe lent).

Le cristal 12, dont l'un des axes (rapide X1 ou lent Y1) est orienté parallèlement au plan de la jonction 6 de la diode-laser 1, se comporte comme un modulateur de phase permettant d'obtenir une accordabilité continue.

Le cristal 13 est orienté de façon que ses axes rapide X2 et lent Y2 fassent un angle de 45° avec le plan de polarisation de la lumière issue de la diode-laser 1 et donc un angle de 45° avec les axes X1 et Y1.

Ce cristal 13 induit électriquement un retard optique modulable par la tension V2 appliquée entre les électrodes du cristal 13. Celui-ci se superpose au retard optique d'offset $D_0$ engendré par la lame biréringente 14 dont l'axe rapide X3 et l'axe lent Y3 sont respectivement parallèles à l'axe rapide X2 et à l'axe lent Y2 du cristal 13.

La tension V2 permet d'obtenir un accord par sauts de modes tandis que la tension V1, appliquée entre les électrodes du cristal 12, permet de réaliser un accord continu de la fréquence d'émission de la diode-laser 1.

A titre purement indicatif et nullement limitatif, on utilise des cristaux 12 et 13 de $LiNbO_3$ de 2 mm d'ouverture (c'est-à-dire admettant un faisceau lumineux de 2 mm de diamètre) et de 10 mm de long, et une lame biréfringente 14 de spath, de 0,6 mm d'épaisseur, qui introduit un retard optique $D_0$ égal à 57 micromètres ; ceci permet de réaliser une cavité de longueur 35 mm, correspondant à une longueur optique de l'ordre de 65 mm et à un intervalle spectral libre ISL (ou "free spectral range") de 2,3 GHz ; le taux d'accord par sauts de modes est alors de l'ordre de 0,2 GHz/volt et le taux d'accord continu est de l'ordre de 1,2 MHz/volt ; les plages d'accord continu ont une largeur de 2,3 GHz.

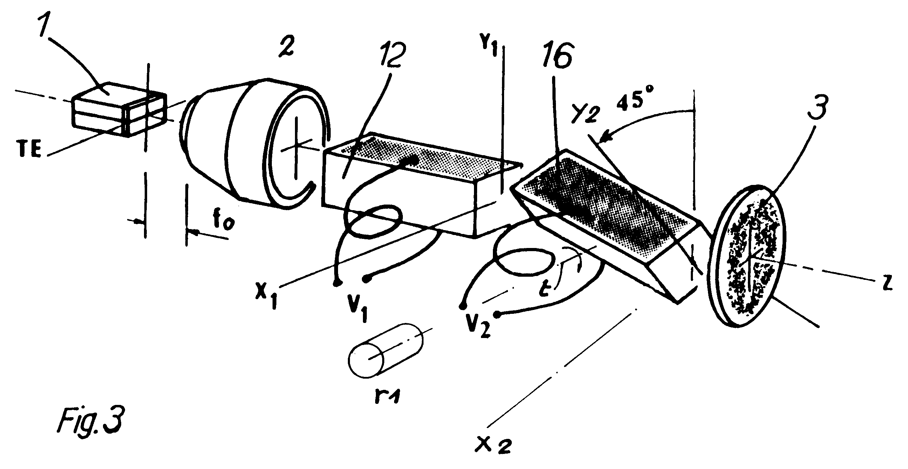

Sur la figure 3, on a représenté schématiquement un autre dispositif conforme à l'invention, qui diffère de celui qui est représenté sur la figure 2 par le fait que le dispositif de la figure 3 ne comporte pas de lame biréfringente 14 munie d'une couche réflectrice 15 mais comporte en revanche un moyen r1 d'inclinaison du cristal 13 autour d'un axe t qui est par exemple et sans que cela soit limitatif parallèle à l'axe X1 et situé dans le plan défini par les axes X1 et Z (plan de polarisation de la lumière issue de la diode-laser 1), le cristal 13 portant sur la figure 3 la référence 16. L'inclinaison peut être de l'ordre d'une dizaine de degrés pour un cristal 16 en $LiNbO_3$ de coupe 0°Z. Cette inclinaison permet d'obtenir le retard optique d'offset $D_0$.

Le moyen d'inclinaison r1 est par exemple un moyen micrométrique de rotation, sur lequel est monté le cristal 16.

Le dispositif représenté sur la figure 3, vis-à-vis du dispositif représenté sur la figure 2, a l'avantage de permettre la réduction du nombre de composants et l'ajustement du retard optique d'offset $D_0$ (par inclinaison du cristal 16). En revanche, il nécessite pour le cristal 16, une ouverture plus importante que celle du cristal 13 de la figure 2, cette ouverture du cristal 16 étant de l'ordre de 10 mm, une telle ouverture plus importante impliquant une tension de commande V2 plus élevée.

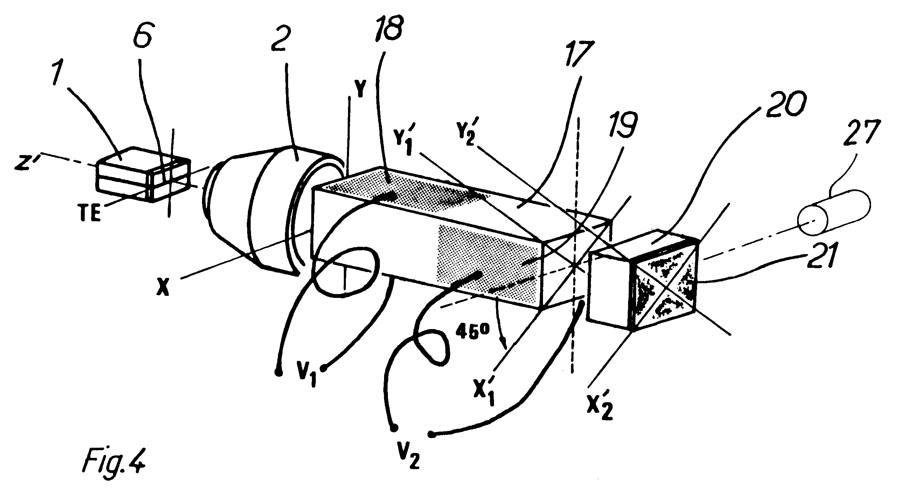

Sur la figure 4, on a représenté schématiquement un autre dispositif conforme à l'invention, qui comprend, à la suite de la lentille de collimation 2, un seul cristal 17 de $LiNbO_3$ de coupe 0°Z suivi par une lame biréfringente 20, la face de cette lame, face qui est la plus éloignée de la diode-laser 1, étant recouverte d'une couche 21 apte à réfléchir la lumière de la source.

Le cristal 17 a une forme allongée suivant l'axe optique Z et une portion de ce cristal porte deux électrodes 18 qui sont opposées l'une à l'autre par rapport à l'axe Z et prévues pour créer un champ électrique parallèle à l'axe lent Y du cristal 17 lorsqu'on applique une tension électrique V1 entre ces électrodes 18.

La portion restante du cristal 17 porte deux électrodes 19 qui sont opposées l'une à l'autre par rapport à l'axe Z et prévues pour créer un champ électrique parallèle à l'axe rapide X du cristal 17 lorsqu'on applique une tension électrique V2 entre ces électrodes 19.

On voit sur la figure 4 que les faces du cristal 17 (cristal parallèlépipédique dans l'exemple représenté) qui portent respectivement les électrodes 18 sont perpendiculaires aux faces du cristal 17 qui portent respectivement les électrodes 19. On voit également que le système d'électrodes 18 est décalé par rapport au système d'électrodes 19.

Le cristal 17 est orienté de manière que l'un de ses axes rapide X et lent Y soit parallèle au plan de la jonction 6 de la diode-laser 1.

Le premier système d'électrodes 18 induit un champ électrique qui est orienté suivant Y et qui a pour effet d'induire une modulation de phase proportionnelle à la tension V1 pour l'onde TE émise par la diode-laser 1.

Le deuxième système d'électrodes 19 induit un champ électrique qui est orienté suivant X et sous l'effet duquel les axes X et Y du cristal subissent une rotation de 45° pour venir respectivement en X1' et Y1'. La portion ou section du cristal, qui porte les électrodes 19, induit alors un retard optique entre les axes X1' et Y1', modulable par la tension électrique V2.

La lame biréfringente 20, dont les axes rapide X2' et lent Y2' sont parallèles respectivement à X1' et Y1', induit le retard optique d'offset $D_0$.

Le dispositif d'accord représenté sur la figure 4 permet d'obtenir une cavité compacte et donc d'augmenter la largeur de la plage spectrale sur laquelle l'accordabilité continue a lieu.

Un exemple de réalisation est donné ci-après à titre purement indicatif et nullement limitatif dans le cas d'une diode-laser en InGaAsP/InP émettant à 1500 nm : un cristal 17 d'ouverture 2 mm, comportant deux systèmes d'électrodes 18 et 19 de longueurs respectives 28 mm et 2 mm, et une lame biréfringente 20 de spath de 600 micromètres d'épaisseur permettent d'obtenir une longueur optique de cavité de l'ordre de L=75 mm, compte tenu de l'encombrement de la lentille de collimation 2, qui est par exemple une lentille sphérique ou une lentille de type SELFOC de 0,3 mm de longueur focale et de 5 mm de long ; dans ces conditions, le taux d'accord par sauts de modes est égal à 0,2 GHz/volt et le taux d'accord continu est égal à 3 MHz/volt, avec une largeur de la plage d'accord continu de l'ordre de 2 GHz.

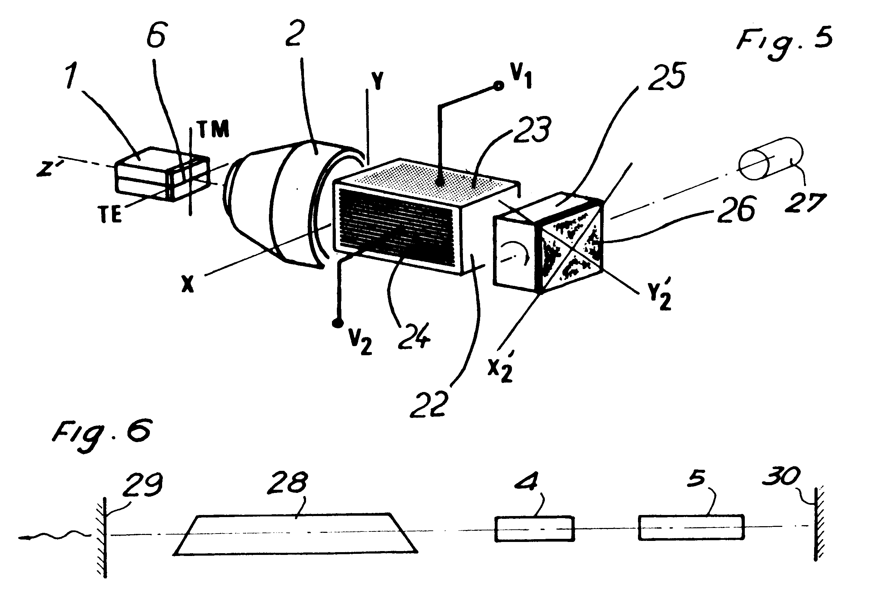

Dans une variante de réalisation qui est schématiquement illustrée par la figure 5, le cristal 17, comportant deux systèmes longitudinalement décalés d'électrodes, est remplacé par un cristal 22 de $LiNbO_3$ de coupe 0°Z, qui est muni d'un double système d'électrodes non décalées 23 et 24, orthogonales l'une par rapport à l'autre.

Plus précisément, le cristal 22, de forme parallélépipédique, porte deux électrodes 23 qui sont placées respectivement sur deux faces opposées l'une à l'autre par rapport à l'axe optique Z et prévues pour créer (par application d'une tension électrique V1 entre elles) un champ électrique parallèle à l'axe lent Y du cristal 22. Ce dernier porte également deux électrodes 24 qui sont placées respectivement sur ses deux autres faces opposées l'une à l'autre par rapport à l'axe Z et prévues pour créer (par application d'une tension électrique V2 entre elles) un champ électrique parallèle à l'axe rapide X du cristal 22.

La lame 20 et la couche réflectrice 21 de la figure 4 portent respectivement les références 25 et 26 sur la figure 5.

L'axe rapide X du cristal 22 est parallèle à la jonction 6 de la diode-laser 1. On réalise l'accord par sauts de modes au moyen de la tension V2 appliquée entre les électrodes 24 et l'on induit l'accord continu au moyen de la tension V1 appliquée entre les électrodes 23.

La lame biréfringente 25, sur laquelle est déposée la couche réflectrice 26, introduit le retard optique d'offset $D_0$.

La configuration de la figure 5 permet d'obtenir une compacité plus élevée que celle des dispositifs des figures 1a, 2, 3 et 4. La longueur optique de la cavité peut être réduite à moins de 20 mm, ce qui donne une plage d'accord continu qui peut atteindre 8 GHz, tout en assurant une meilleure stabilité de la fréquence d'émission que dans les cas précédents.

Pour l'ensemble des dispositifs décrits en se référant aux figures 1a, 2, 3, 4 et 5, les divers composants de ces dispositifs (deux cristaux ou deux cristaux plus une lame biréfringente ou un cristal plus une lame biréfringente) peuvent être mis dans un ordre quelconque, étant entendu que le moyen de réflexion de lumière (miroir 3 ou couche réflectrice) doit toujours être placé à l'extrémité de la cavité (sur le composant le plus éloigné de la diode-laser 1 lorsque ce moyen de réflexion est une couche réflectrice).

De plus, dans le cas où le dispositif comporte une lame biréfringente (figures 2, 4 et 5), cette lame peut être montée sur un moyen d'inclinaison 27 (figures 4 et 5) permettant d'incliner la lame par rotation autour d'un axe qui est perpendiculaire à Z et par exemple, sans que cela soit limitatif, situé dans le plan de polarisation TE, afin d'obtenir un ajustement du retard optique d'offset $D_0$ et ainsi modifier la fréquence centrale des plages d'accord ou les taux d'accord.

Dans ce cas, la couche réflectrice est de préférence déposée sur l'un des cristaux utilisés (ou le cristal utilisé) plutôt que sur la lame biréfringente, afin de préserver l'alignement optique de la cavité, cette lame étant alors placée en position intermédiaire dans la cavité, de sorte que c'est un cristal qui se trouve alors le plus éloigné de la diode-laser 1.

Par ailleurs, la présente invention n'est pas limitée à une utilisation avec une diode-laser. Ceci est illustré schématiquement par la figure 6 sur laquelle un dispositif conforme à l'invention permet d'accorder continûment la fréquence d'émission par exemple d'un laser à gaz tel qu'un laser He-Ne, qui a été modifié de façon à allonger sa cavité.

On voit sur la figure 6 le tube 28 du laser à gaz avec ses faces de Brewster, ainsi qu'un miroir partiellement transparent 29 de ce laser, à travers lequel passe une partie de la lumière qui est produite par le système de la figure 6, partie que l'on utilise pour l'application souhaitée du système.

L'autre miroir 30 totalement réflecteur du laser à gaz est décalé : il est éloigné du tube 28, de manière à pouvoir insérer entre eux le dispositif objet de l'invention. Ainsi, entre le tube 28 et le miroir 30, on insère par exemple des éléments 4 et 5 qui sont du genre de ceux de la figure 1a et qui sont disposés convenablement (comme on l'a expliqué dans la description de la figure 1a) par rapport au plan de polarisation de la lumière issue du tube 28.

DOCUMENTS CITES

(1) F. FAVRE et al., Electronics Letters, vol.22, n°15, 1986, p.795-796

(2) Demande de brevet français n° 8602504 du 24 février 1986

(3) B. GLANCE et al., Electronics Letters, vol.23, n°3, 1987, p.98-99

(4) N.A. OLSSON et al., IEEE Journal of Lightwave Technology, vol.LT-5, n°4, avril 1987, p.510 à 515

(5) W.V. SORIN et al., Electronics Letters, vol.23, n°8, 1987, p.390-391

(6) K. KOBAYASHI et al., IEEE Journal of Lightwave Technology, vol.6, n°11, novembre 1988, p.1623-1633

(7) J.M. TELLE et al., Applied Physics Letters, vol.24, n°2, 15 janvier 1974, p.85-87

(8) C. CHAPUIS et al., Optics Communications, vol.47, n°1, 1 août 1983, p.12-17

(9) Demande de brevet français n°8419861 du 27 décembre 1984

(10) C.L. TANG et al., Applied Physics Letters, vol.30, n°2, 15 janvier 1977, p.113-116

(11) A. OLSSON et al., IEEE Journal of Quantum Electronics, vol.QE-15, n°10, octobre 1979, p.1085-1088

(12) A. SCHREMER et al., Applied Physics Letters 55(1), 3 Juillet 1989, p.19-21

(13) F. HEISMANN et al., Applied Physics Letters, 51(3), 20 juillet 1987, p.164-166

(14) G.A. COQUIN et al., Electronics Letters, vol.24, n°10, 12 mai 1988, p.599-600

(15) G. COQUIN et al., "Single - and Multiple -Wavelength Operation of Acoustooptically Tuned Semiconductor Lasers at 1.3 micrometer", IEEE Journal of Quantum Electronics, vol.25, n°6, juin 1989.

**Revendications**

1. Dispositif d'accord d'une source (1, 28) de lumière cohérente et polarisée rectilignement, ce dispositif comportant une cavité externe terminée par un moyen (3, 15, 21, 26, 30) de réflexion, vers la source, de la lumière émise par cette source, ce dispositif comprenant également un moyen électro-optique (5; 13, 14; 16; 17, 19, 20; 22, 24, 25) qui comprend un cristal électro-optique massif, est placé dans la cavité externe et forme un filtre spectral à fonction de transfert modulable électriquement, ce moyen électro-optique étant prévu pour sélectionner un mode longitudinal particulier parmi l'ensemble des modes longitudinaux susceptibles d'osciller à l'intérieur de la cavité,

dispositif caractérisé en ce qu'il comprend en outre un moyen électro-optique (4; 12; 17, 18; 22, 23) de variation de la longueur optique de la cavité, ce moyen de variation comprenant un cristal électro-optique massif, étant placé dans la cavité et prévu pour déplacer de façon continue la position du mode longitudinal sélectionné.

2. Dispositif selon la revendication 1, caractérisé en ce que chacun des axes rapide (X2) et lent (Y2) du cristal électro-optique (5) du moyen formant un filtre spectral fait un angle de 45° avec le plan de polarisation de la lumière issue de la source (1).

3. Dispositif selon la revendication 1, caractérisé en ce que le moyen électro-optique formant un filtre spectral comprend en outre une lame biréfringente (14), en ce que l'axe rapide (X3) et l'axe lent (Y3) de la lame biréfringente sont respectivement parallèles à l'axe rapide (X2) et à l'axe lent (Y2) du cristal électro-optique (13) de ce moyen formant un filtre spectral et en ce que chacun de ces axes fait un angle de 45° avec le plan de polarisation de la lumière issue de la source (1).

4. Dispositif selon la revendication 1, caractérisé en ce que chacun des axes rapide (X2) et lent (Y2) du cristal électro-optique (16) du moyen formant un filtre spectral fait un angle de 45° avec le plan de polarisation de la lumière issue de la source (1) et en ce que ce cristal est inclinable par rapport à l'axe optique (Z) de la cavité.

5. Dispositif selon l'une quelconque des revendications 1 à 4, caractérisé en ce que l'un des axes rapide (X1) et lent (Y1) du cristal électro-optique (4; 12) du moyen de variation de la longueur optique de la cavité est parallèle au plan de polarisation de la lumière issue de la source (1).

6. Dispositif selon la revendication 1, caractérisé en ce qu'il comprend, dans la cavité :
   - une lame biréfringente (20), dont chacun des axes rapide (X2') et lent (Y2') fait un angle de 45° avec le plan de polarisation de la lumière issue de la source (1), et
   - un cristal biréfringent (17) dont on peut modifier la biréfringence par application d'un champ électrique, dont l'un des axes rapide (X) et lent (Y) est parallèle au plan de polarisation de la lumière issue de la source (1) et qui comporte :

. une première portion munie d'électrodes (18) et prévue pour former le moyen de variation de la longueur optique de la cavité, et

. une deuxième portion qui est munie d'électrodes (19) permettant de créer un champ électrique perpendiculaire au champ électrique que permettent de créer les électrodes de la première portion, et qui est prévue pour former, en coopération avec la lame biréfringente (20), le moyen électro-optique formant le filtre spectral.

7. Dispositif selon la revendication 1, caractérisé en ce qu'il comprend, dans la cavité :

- une lame biréfringente (25), dont chacun des axes rapide (X2') et lent (Y2') fait un angle de 45° avec le plan de polarisation de la lumière issue de la source (1), et

- un cristal biréfringent (22) dont on peut modifier la biréfringence par application d'un champ électrique, dont l'un des axes rapide (X) et lent (Y) est parallèle au plan de polarisation de la lumière issue de la source (1) et qui porte un premier couple d'électrodes (23) ainsi qu'un deuxième couple d'électrodes (24) permettant de créer un champ électrique perpendiculaire au champ électrique que permettent de créer les électrodes du premier couple, ce premier couple d'électrodes (23) coopérant avec le cristal (22) pour former le moyen de variation de la longueur optique de la cavité et le deuxième couple d'électrodes (24) coopérant avec le cristal (22) pour former, en coopération avec la lame biréfringente (25), le moyen électro-optique formant le filtre spectral.

8. Dispositif selon l'une quelconque des revendications 3, 6 et 7, caractérisé en ce qu'il comprend en outre un moyen (27) d'inclinaison de la lame biréfringente (14, 20, 25) par rapport à l'axe optique (Z) de la cavité.

9. Dispositif selon l'une quelconque des revendications 1 à 8, caractérisé en ce que le moyen de réflexion de la lumière émise par la source est une couche (15, 21, 26) apte à réfléchir cette lumière et formée sur l'élément biréfringent qui, dans la cavité, est le plus éloigné de la source (1).

10. Dispositif selon l'une quelconque des revendications 1 à 9, caractérisé en ce que la source est un laser à semiconducteur (1) dont la face, qui est du côté du moyen de réflexion (3, 15, 21, 26, 30), est traitée par une couche anti-reflet (ar).

**Patentansprüche**

1. Einstellungsvorrichtung für eine kohärente und linearpolarisierte Lichtquelle (1, 28), wobei diese Vorrichtung eine äußere Vertiefung aufweist, die durch ein Reflektionsmittel (3, 15, 21, 26, 30) zur Quelle des Lichtes hin beendet wird, das durch diese Quelle emittiert wird, wobei diese Vorrichtung, die ebenfalls ein elektro-optisches Mittel (5; 13; 14; 16; 17, 19, 20; 22, 24, 25) aufweist, das einen massiven elektro-optischen Kristall umfaßt, in der äußeren Vertiefung angeordnet ist, und einen Spektralfilter mit elektrisch modulierbarer Transferfunktion bildet, wobei dieses elektro-optische Mittel zum Auswählen eines bestimmten längsgerichteten Modus aus der Gesamtheit der längsgerichteten Modi, die im Innern der Vertiefung oszillieren können, vorgesehen ist, wobei diese Einstellungsvorrichtung dadurch gekennzeichnet ist, daß sie ferner ein elektrooptisches Variationsmittel (4; 12; 17, 18; 22, 23) für die optische Länge der Vertiefung aufweist, wobei das Variationsmittel einen massiven elektro-optischen Kristall aufweist, der in der Vertiefung angeordnet ist und vorgesehen ist, um die Position des gewählten längsgerichteten Modus in kontinuierlicher Art und Weise zu verschieben.

2. Vorrichtung nach Anspruch 1, dadurch gekennzeichnet, daß eine jede der schnellen (X2) und der langsamen (Y2) Achsen des elektrooptischen Kristalls (5) des Mittels, das einen Spektralfilter bildet, mit der Polarisationsebene des aus der Quelle (1) kommenden Lichtes einen Winkel von 45° bildet.

3. Vorrichtung nach Anspruch 1, dadurch gekennzeichnet, daß das elektro-optische Mittel, das einen Spektralfilter bildet, ferner ein doppelbrechendes Blatt (14) umfaßt, daß die schnelle Achse (X3) und die langsame Achse (Y3) des doppelbrechenden Blattes jeweils parallel sind zu der schnellen Achse (X2) und der langsamen Achse (Y2) des elektro-optischen Kristalls (13) desjenigen Mittels, das den Spektralfilter bildet, und daß eine jede dieser Achsen mit der Polarisationsebene des aus der Quelle (1) kommenden Lichts einen Winkel von 45 bildet.

4. Vorrichtung nach Anspruch 1, dadurch gekennzeichnet, daß eine jede der schnellen (X2) und der langsamen (Y2) Achsen des elektrooptischen Kristalls (16) des Mittels, das einen Spektralfilter bildet, mit der Polarisationsebene des aus der Quelle (1) kommenden Lichts einen Winkel von 45° bildet, und daß der Kristall im Verhältnis zu der optischen Achse (Z) der Vertiefung neigbar ist.

5. Vorrichtung nach einem der Ansprüche 1 bis 4, dadurch gekennzeichnet, daß eine der schnellen (X1) und der langsamen (Y1) Achsen des elektro-optischen Kristalls (4; 12) des Variationsmittels für die optische Länge der Vertiefung mit der Polarisationsebene des aus der Quelle (1) kommenden Lichts parallel ist.

6. Vorrichtung nach Anspruch 1, dadurch gekennzeichnet, daß sie in der Vertiefung umfaßt :
   - ein doppelbrechendes Blatt (20), von dem jede der schnellen (x2') und langsamen (Y2') Achsen mit der Polarisationsebene des aus der Quelle (1) kommenden Lichts einen Winkel von 45° bildet, und
   - einen doppelbrechenden Kristall (17), dessen Doppelbrechung durch Anlegung eines elektrischen Feldes modifiziert werden kann, dessen eine der schnellen (X) und langsamen (Y) Achsen parallel ist zu der Polarisationsebene des aus der Quelle (1) kommenden Lichts, und der umfaßt:
     einen ersten Abschnitt, der mit Elektroden (18) versehen ist und der vorgesehen ist, um das Variationsmittel der optischen Länge der Vertiefung zu bilden, und
     einen zweiten Abschnitt, der mit Elektroden (19) versehen ist, die es ermöglichen, ein elektrisches Feld zu erzeugen, das zu dem elektrischen Feld senkrecht ist, das durch die Elektroden des ersten Abschnitts erzeugt werden kann, und das vorgesehen ist, um in Zusammenwirkung mit dem doppelbrechenden Blatt (20) das elektro-optische Mittel zu bilden, das den Spektralfilter darstellt.

7. Vorrichtung nach Anspruch 1, dadurch gekennzeichnet, daß sie in der Vertiefung aufweist :
   - ein doppelbrechendes Blatt (25), von dem jede der schnellen (X2') und langsamen (Y2') Achsen mit der Polarisationsebene des aus der Quelle (1) kommenden Lichtes einen Winkel von 45° bildet, und
   - einen doppelbrechenden Kristall (22), dessen Doppelbrechung durch Anlegen eines elektrischen Feldes modifiziert werden kann, dessen eine der schnellen (X) und langsamen (Y) Achsen parallel ist zu der Polarisationsebene des aus der Quelle (1) kommenden Lichts und der ein erstes Elektrodenpaar (23) sowie ein zweites Elektrodenpaar (24) trägt, die es ermöglichen, ein elektrisches Feld zu erzeugen, das zu dem elektrischen Feld senkrecht ist, das durch die Elektroden des ersten Paares erzeugt werden kann, wobei dieses erste Elektrodenpaar (23) mit dem Kristall (22) zusammenwirkt, um das Variationsmittel der optischen Länge der Vertiefung zu bilden, und das zweite Elektrodenpaar (24) mit dem Kristall (22) zusammenwirkt, um in Zusammenarbeit mit dem doppelbrechenden Blatt (25) das opto-elektronische Mittel zu bilden, das den Spektralfilter darstellt.

8. Vorrichtung nach einem der Ansprüche 3, 6, und 7, dadurch gekennzeichnet, daß sie ferner ein Mittel (27) zur Neigung des doppelbrechenden Blattes (14, 20, 25) im Verhältnis zu der optischen Achse (Z) der Vertiefung aufweist.

9. Vorrichtung nach einem der Ansprüche 1 bis 8, dadurch gekennzeichnet, daß das Reflektionsmittel des Lichtes, das von der Quelle emittiert wird, eine Schicht (15, 21, 26) darstellt, die in der Lage ist, dieses Licht zu reflektieren und auf dem doppelbrechenden Element gebildet ist, das in der Vertiefung das am weitesten von der Quelle (1) Entfernte ist.

10. Vorrichtung nach einem der Ansprüche 1 bis 9, dadurch gekennzeichnet, daß die Quelle ein Halbleiter-Laser (1) ist, dessen Fläche, die auf der Seite des Reflektionsmittels (3, 15, 21, 26, 30) liegt, mit einer Antireflex-Schicht (ar) behandelt ist.

**Claims**

1. Device for tuning a coherent and rectilinearly polarized light source (1,28), said device comprising an external cavity ended by a reflective device (3,15,21,26,30) towards the source of the light emitted by this source, said device also including an electro-optical device (5,13,14,16,17,19,20, 22,24,25), which includes a compact electro-optical crystal, placed in the external cavity and forms a spectral filter having an electrically modulable transfer function, this electro-optical device being provided so as to select a particular longitudinal mode from all the longitudinal modes able to oscillate inside the cavity, characterized in that said device further includes an electro-optical device (4,12,17,18,22,23) for varying the optical length of the cavity, this variation device including a compact electro-optical crystal being placed in the cavity and provided to continuously move the position of the selected longitudinal mode.

2. Device according to claim 1, characterized in that each of the fast (X2) and slow (Y2) axes of the electro-optical crystal (5) of the device forming a spectral filter form an angle of 45° with the polarization plane of the light derived from the source (1).

3. Device according to claim 1, characterized in that the electro-optical device forming a spectral filter further includes a double refractive plate (14), that the fast axis (X3) and slow axis (Y3) of the double refractive plate are respectively parallel to the fast axis (X2) and the slow axis (Y2) of the electro-optical crystal (13) of said device forming a spectral filter and that each of these axes forms an angle of 45° with the polarization plane of the light derived from the source (1).

4. Device according to claim 1, characterized in that each of the fast (X2) and slow (Y2) axes of the electro-optical crystal (16) of the device forming a spectral filter form an angle of 45° with the polarization plane of the light derived from the source (1) and that this crystal is able to be slanted with respect to the optical axis (Z) of the cavity.

5. Device according to any one of the claims 1 to 4, characterized in that one of the fast (X1) and slow (Y1) axes of the electro-optical crystal (4,12) of the device for varying the optical length of the cavity is parallel to the polarization plane of the light derived from the source (1).

6. Device according to claim 1, characterized in that it includes in the cavity:
   - one double refractive plate (20), each of whose fast (X2') and slow (Y2') axes form an angle of 45° with the polarization plane of the light derived from the source (1), and
   - one double refractive crystal (17) whose double refraction is able to be modified by applying an electric field, one of the fast (X) and slow (Y) axes of said crystal being parallel to the polarization plane of the light derived from the source (1) and which comprises:
   one first portion provided with electrodes (18) and provided to form the device for varying the optical length of the cavity, and
   a second portion provided with electrodes (19) and making it possible to create an electric field perpendicular to the electric field able to be created by the electrodes of the first portion and which is provided so as to form in cooperation with the double refractive plate (20) the electro-optical device forming the spectral filter.

7. Device according to claim 1, characterized in that it includes in the cavity:

   - one double refractive plate (25) each of whose fast (X2') and slow (Y2') axes form an angle of 45° with the polarization plane of the light derived from the source (1), and
   - one double refractive crystal (22) whose double refraction is able to be modified by applying an electric field, one of whose fast (X) and slow (Y) axes being parallel to the polarization plane of the light derived from the source (1) and which bears a first pair of electrodes (23), as well as a second pair of electrodes (24) making it possible to create an electric field perpendicular to the electric field able to be created by the first pair of electrodes, said first pair of electrodes (23) cooperating with the crystal (22) so as to form the device for varying the optical length of the cavity and the second pair of electrodes (24) cooperating with the crystal so as to form, in cooperation with the double refractive plate (25), the electro-optical device forming the spectral filter.

8. Device according to any one of the claims 3,6 and 7, charaterized in that it further includes a device (27) for slanting the double refractive plate (14,20,25) with respect to the optical axis (Z) of the cavity.

9. Device according to any one of the claims 1 to 8, characterized in that the device for reflecting the light emitted by the source is a film (15,21,26) able to reflect this light and formed on the double refractive element which, in the cavity, is furthest from the source (1).

10. Device according to any one of the claims 1 to 9, characterized in that the source is a semiconductor laser (1) whose face, which is on the side of the reflecting device (3,15,21,26, 30) is treated by an anti-reflection coating (ar).

Fig. 1a

Fig.1b

Fig.1c

Fig. 1d

*Fig. 1e*

Fig.2

EP 0 433 109 B1

Fig.3

Fig.4

Fig. 5

Fig. 6

EP 0 433 109 B1